# EUROPEAN PATENT APPLICATION

(11) **EP 2 282 028 A1**
(43) Date of publication of application: **09.02.2011**
(21) Application number: 10166338.3
(22) Date of filing: 17.06.2010
(51) Int. Cl.: F01N 3/20, F01N 13/08

(54) **Exhaust gas purification apparatus**

(30) Priority: 30.06.2009 JP 2009155350
(71) Applicant: Kabushiki Kaisha Toyota Jidoshokki, Kariya-shi, Aichi 448-8671 (JP)
(72) Inventor: Kato, Yoshifumi, Kariya-shi, Aichi 448-8671 (JP)
(74) Representative: TBK-Patent

(57) **Abstract**

An exhaust gas purification apparatus (101) includes an oxidation catalyst (106) provided in an exhaust gas passage (105) through which exhaust gas flows, a SCR catalyst (109) provided downstream of the oxidation catalyst (106), a urea water passage (112) that is formed through a urea water pipe (110) and provided in the oxidation catalyst (106) and a urea water supply device provided outside the exhaust gas passage (105) for supplying urea water to the urea water passage (112). The urea water passage (112) is separated from the oxidation catalyst (106) and led downstream of the oxidation catalyst (106).

## Description

### BACKGROUND OF THE INVENTION

The present invention relates to an exhaust gas purification apparatus and, more specifically, to an exhaust gas purification apparatus having a urea SCR (selective catalytic reduction) system for reducing nitrogen oxides (NOx) in exhaust gas discharged from a diesel engine.

The urea SCR system has been developed for reducing NOx in exhaust gas discharged from a diesel engine. The urea SCR system includes an oxidation catalyst for oxidizing part of nitrogen monoxide (NO) contained in exhaust gas to nitrogen dioxide (NO2), a urea supply nozzle that is provided downstream of the oxidation catalyst for supplying urea water to exhaust gas and an SCR catalyst that is provided downstream of the urea supply nozzle for converting NOx into nitrogen and H2O by chemical reaction between NOx and ammonia generated by the hydrolysis of the urea water.

To decrease NOx at a high efficiency, ammonia should be generated sufficiently by the hydrolysis of the urea water upstream of the SCR catalyst. This requires the urea SCR system to have a length and a temperature enough for the hydrolysis of the urea water to take place. Conventionally, it has been so arranged that urea water is supplied from upstream of the oxidation catalyst for downsizing the exhaust gas purification apparatus and simultaneously securing the reaction length and the reaction temperature. However, when the urea water is supplied from upstream of the oxidation catalyst, the urea water is oxidized by the oxidation catalyst thereby to inhibit ammonia generation. Furthermore, the generated ammonia itself is also oxidized by the oxidation catalyst, so that the amount of ammonia is reduced and, therefore, the efficiency for decreasing NOx in exhaust gas decreases.

An exhaust gas purification apparatus disclosed in published Japanese translation 2006-503208 of PCT International Publication is made compact in size while securing the efficiency of decreasing NOx in exhaust gas. This is accomplished by boring a hole through the oxidation catalyst and supplying urea water from upstream of the oxidation catalyst to exhaust gas flowing through the hole.

In this apparatus which has an urea water supplying nozzle provided in the exhaust gas passage and directly exposed to the heat of the exhaust gas, however, hydrolysis and polymerization of urea water occurs in the region adjacent to the nozzle thereby to clog the nozzle, with the result that the apparatus reduces its reliability.

The present invention is directed to solving the above problems and providing a downsized and reliable exhaust gas purification apparatus achieving highly efficient NOx reduction.

### SUMMARY OF THE INVENTION

An exhaust gas purification apparatus includes an oxidation catalyst provided in an exhaust gas passage through which exhaust gas flows, a SCR catalyst provided downstream of the oxidation catalyst, a urea water passage that is formed through a urea water pipe and provided in the oxidation catalyst and a urea water supply device provided outside the exhaust gas passage for supplying urea water to the urea water passage. The urea water passage is separated from the oxidation catalyst and led downstream of the oxidation catalyst.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
FIG. 1 is a schematic view of a diesel engine with an exhaust gas purification apparatus according to a first embodiment of the present invention;
FIG. 2 is a schematic cross sectional view of the exhaust gas purification apparatus of FIG. 1; and
FIG. 3 is a schematic cross sectional view similar to FIG. 2, but showing an exhaust gas purification apparatus according to a second embodiment of the present invention.

### DETAILED DESCRIPTION OF THE PREFERRED EMBODIMENTS

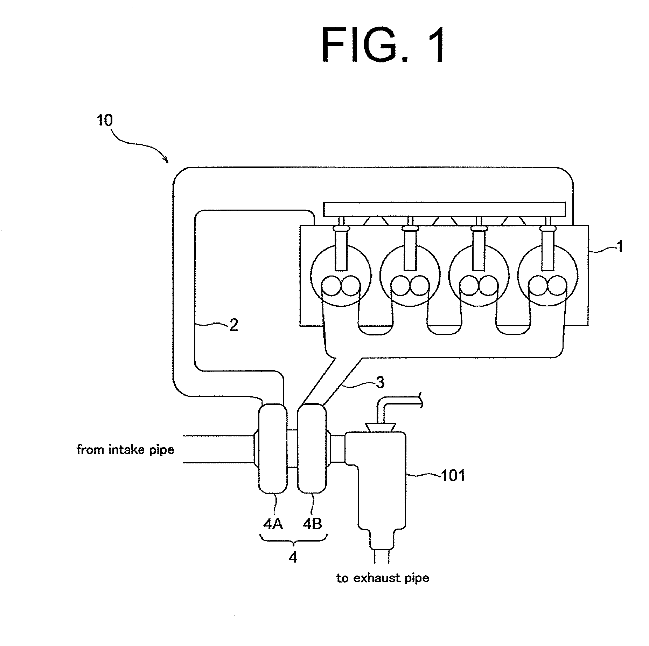

The following will describe the embodiments of the exhaust gas purification apparatus according to the present invention with reference to FIGS. 1 through 3. Referring to FIG. 1 showing the diesel engine with the exhaust gas purification apparatus according to the first embodiment of the present invention, the diesel engine is designated by numeral 1 and an intake manifold 2 and an exhaust manifold 3 are fixed to the engine 1. Reference numeral 4 designates a turbo-charger having a compressor 4A connected at the inlet thereof to an intake pipe (not shown) and at the outlet thereof to the intake manifold 2, and a turbine 4B connected at the inlet thereof to the exhaust manifold 3 and at the outlet thereof to an exhaust gas purification apparatus 101. The engine 1, the intake manifold 2, the exhaust manifold 3 and the turbo-charger 4 cooperate to form an engine assembly 10.

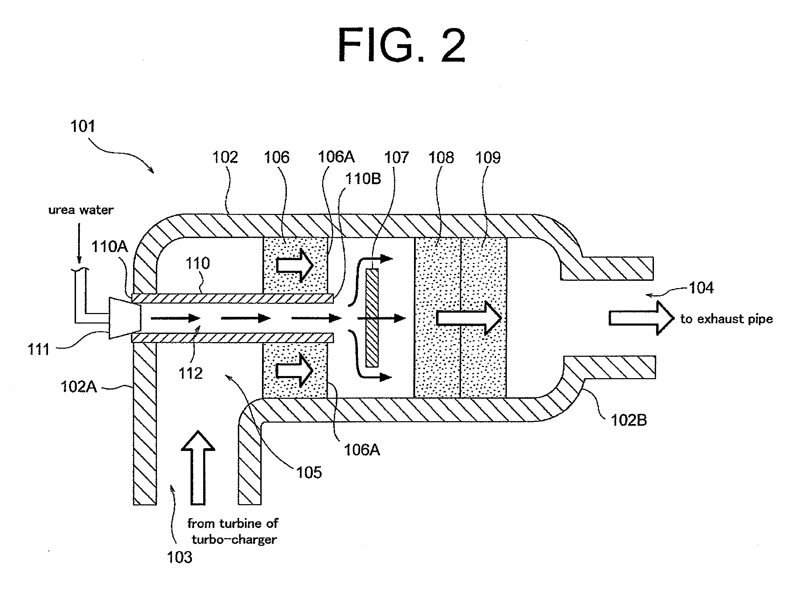

Referring now to FIG. 2, the exhaust gas purification apparatus 101 includes a substantially cylindrically-shaped casing 102. The casing 102 is formed adjacently to one end 102A thereof with an exhaust gas inlet 103 that communicates with the turbine 4B of the turbo-charger 4 and at the other end 102B thereof with an exhaust gas outlet 104 that communicates with an exhaust pipe (not shown). The casing 102 further has formed therethrough an exhaust gas passage 105 allowing exhaust gas to flow from the exhaust gas inlet 103 to the exhaust gas outlet 104.

An oxidation catalyst 106 is provided in the exhaust gas passage 105 for oxidizing a part of NO contained in the exhaust gas into NO2. A disk-shaped diffusion plate 107 as a mixing device for mixing the exhaust gas with ammonia generated in an urea water pipe 110 (which will be hereinafter described) is provided downstream of the oxidation catalyst 106. Downstream of the diffusion plate 107 are provided a DPF (diesel particulate filter) 108 for removing particulate matter (PM) in the exhaust gas and an SCR catalyst 109 for converting NOx into nitrogen and H2O by chemical reaction between NOx and ammonia. The DPF 108 and the SCR catalyst 109 are integrally formed in the first embodiment. Thus, the oxidation catalyst 106, the diffusion plate 107, the DPF 108 and the SCR catalyst 109 are provided in this order in the casing 102 as viewed in the direction of exhaust gas flowing.

The aforementioned cylindrically-shaped urea water pipe 110 is provided extending in the exhaust gas passage 105 of the casing 102 from the end 102A of the casing 102. The urea water pipe 110 is made of a metal with high thermal conductivity and has formed therein a urea water passage 112 for allowing urea water to flow therethrough. One end 110A of the urea water pipe 110 is passed through the casing 102 upstream of the oxidation catalyst 106, connected to a urea water supply nozzle 111 as a urea water supply device that is provided outside the exhaust gas passage 105, isolated from the exhaust gas passage 105 and connected to a urea water tank (not shown). The other end 110B of the urea water pipe 110 passes through the oxidation catalyst 106 and opens at the end face 106A on downstream side of the oxidation catalyst 106. Therefore, the urea water passage 112 is led downstream of the oxidation catalyst 106. Thus, the urea water passage 112 passes through a part of the exhaust gas passage 105 while being isolated from the exhaust gas passing through the passage 105, is extended from upstream outside the oxidation catalyst 106 to the oxidation catalyst 106, provided in the oxidation catalyst 106 while being separated form the oxidation catalyst 106 and extended downstream of the oxidation catalyst 106.

The following will describe the operation of the exhaust gas purification apparatus 101 according to the first embodiment. Exhaust gas emitted from the engine assembly 10 flows into the exhaust gas purification apparatus 101 through the inlet 103. In FIG. 2, outline arrows indicate the direction in which the exhaust gas flows in the exhaust gas purification apparatus 101. Exhaust gas in the exhaust gas passage 105 firstly passes through the oxidation catalyst 106, where a part of NO contained in the exhaust gas is oxidized into NO2.

On the other hand, urea water is supplied into the urea water passage 112 through the urea water supply nozzle 111. In FIG. 2, black arrows indicate the direction in which the urea water flows in the exhaust gas purification apparatus 101. Urea water which flows in the urea water passage 112 extending through the exhaust gas passage 105 upstream of the oxidation catalyst 106 is subject to the heat of the exhaust gas indirectly. Furthermore, since the urea water passage 112 also extends through the oxidation catalyst 106, the urea water flowing through the urea water passage 112 is also subject to the reaction heat generated when a part of NO in the exhaust gas is oxidized in the oxidation catalyst 106.

The urea water flowing through the urea water passage 112 is hydrolyzed into ammonia and carbon dioxide under the influence of the heat of the exhaust gas and the reaction heat of the oxidation catalyst 106. The ammonia and the carbon dioxide thus generated are added to the exhaust gas in the region adjacent to the end 110B of the urea water pipe 110 and the end face 106A of the oxidation catalyst 106. The urea water passage 112 is isolated from the oxidation catalyst 106 by the wall of the urea water pipe 110, so that none of the urea water flowing in the passage 112 is oxidized by the oxidation catalyst 106 and, therefore, the generation of ammonia is undisturbed. The generated ammonia is prevented from being reduced due to the oxidation by the oxidation catalyst 106.

The ammonia added to the exhaust gas is diffused by impinging on the diffusion plate 107 that faces the end 1108 of the urea water pipe 110 and mixed with the exhaust gas. The exhaust gas mixed with ammonia flows through the DPF 108, where PM in the exhaust gas is removed, and then through the SCR catalyst 109, where NOx in the exhaust gas is converted into nitrogen and H2O by chemical reaction between NOx and ammonia. The exhaust gas thus purified flows out of the exhaust gas purification apparatus 101 through the outlet 104.

As previously described, the exhaust gas purification apparatus 101 according to the first embodiment has the urea water passage 112 that is isolated from the exhaust gas passage 105 and the oxidation catalyst 106 while passing through a part of the exhaust gas passage 105 and the oxidation catalyst 106, respectively. Thus, the exhaust gas purification apparatus can be made compact in size while ensuring a length of passage and a temperature that are required for the urea water to be hydrolyzed into ammonia and carbon dioxide. No urea water flowing through the urea water passage 112 contacts with the oxidation catalyst 106 directly. Since the generation of ammonia is not inhibited by oxidation of urea water by the oxidation catalyst 106, the efficiency of removing NOx from the exhaust gas can be maintained. The exhaust gas does not flow through the urea water passage 112, but flows through the oxidation catalyst 106 inevitably. Since NO in the exhaust gas is oxidized at the oxidation catalyst 106 and does not flow into the SCR catalyst 109, the efficiency of removing NOx from the exhaust gas can be maintained. Furthermore, the urea water supply nozzle 111 which is provided in a way to be isolated from the exhaust gas passage 105 is not exposed directly to the heat of the exhaust gas. Thus, the urea water supply nozzle 111 is prevented from being clogged and, therefore, the reliability of the exhaust gas purification apparatus 101 can be improved.

In addition to the above effects, the provision of the diffusion plate 107 downstream of the oxidation catalyst 106 helps to promote the mixing of ammonia with the exhaust gas. The DPF 108 provided downstream of the oxidation catalyst 106 removes the PM in the exhaust gas. The DPF 108 and the SCR catalyst 109 are integrally formed, and furthermore, the DPF 108, the SCR catalyst 109 and the oxidation catalyst 106 are all housed in the single casing 102, so that the exhaust gas purification apparatus 101 can be downsized.

Some conventional exhaust gas purification apparatuses are too large to be installed in an engine room, and they are mounted to the bottom of a vehicle body. However, the exhaust gas purification apparatus 101 according to the first embodiment of the present invention is small enough to be directly fixed to the engine assembly 10 and installed in the engine loom. Therefore, due to the heat of the engine assembly 10, the hydrolysis of urea water flowing through the urea water passage 112 can be promoted and the catalytic activity of the oxidation catalyst 106 and the SCR catalyst 109 is promoted.

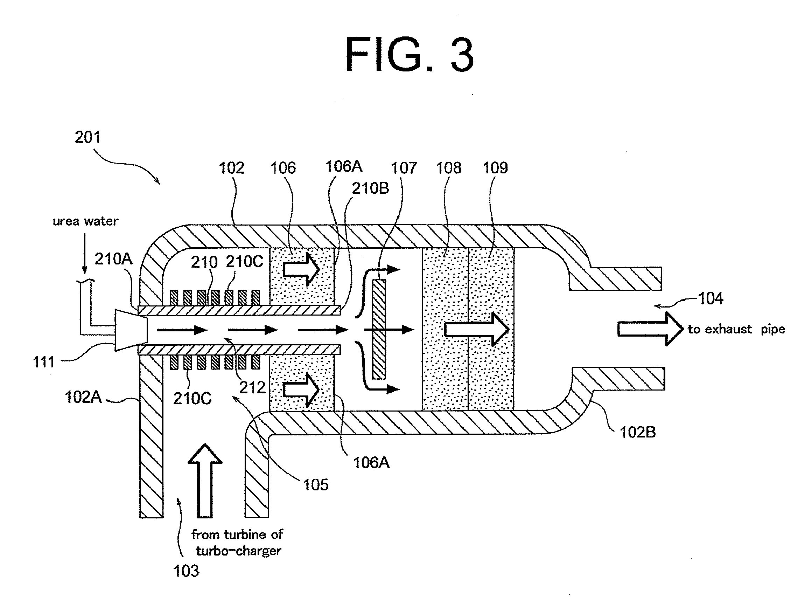

The following will describe an exhaust gas purification apparatus 201 according to the second embodiment of the present invention with reference to FIG. 3. The following description will use the same reference numerals for the common elements or components of the exhaust gas purification apparatus 101 shown in FIG. 2, and the description of such elements or components for the second embodiment will be omitted.

The exhaust gas purification apparatus 201 according to the second embodiment differs from the exhaust gas purification apparatus 101 of the first embodiment in that the urea water pipe 210 has a heat absorption device for absorbing heat from the exhaust gas. Specifically, a plurality of disk-shaped heat-absorbing fins 210C as the heat-absorbing device of the present invention are provided on outer peripheral surface of the urea water pipe 210. The heat-absorbing fins 210C are made of a metal with high thermal conductivity. Therefore, as compared to the urea water pipe 110 of the first embodiment, the urea water pipe 210 absorbs more heat from the exhaust gas by virtue of the heat-absorbing fins 210C, thereby further promoting the hydrolysis of the urea water flowing through the urea water passage 212

When the engine assembly 10 is not equipped with the turbo-charger 4 in the first and the second embodiments, the exhaust gas purification apparatuses 101, 201 may be provided immediately downstream of the exhaust manifold 3.

The urea water supply nozzle 111, which is provided at the end 102A of the casing 102 upstream of the oxidation catalyst 106 in the first and the second embodiments, may be located anywhere as far as it is provided upstream of the downstream end face 106A of the oxidation catalyst 106. At least, the urea water supply nozzle 111 needs to be isolated from the exhaust gas passage 105 and the urea water passages 112, 212 passing through the oxidation catalyst 106 need to be isolated from the oxidation catalyst 106 and to open to the exhaust gas passage 105 at the downstream end of the oxidation catalyst 106.

A plurality of urea water supply nozzles 111 and their corresponding urea water passages 112, 212 may be provided in the first and the second embodiments.

The SCR catalyst 109 is provided downstream of the DPF 108 and integrally formed with the DPF 108 in the first and the second embodiments. However, the DPF 108 may be integrally formed with the SCR catalyst 109 in a manner that the DPF 108 supports the SCR catalyst 109.

The DPF 108 is integrally formed with the SCR catalyst 109 in the first and the second embodiments, but the DPF 108 may be provided separately from the SCR catalyst 109.

The exhaust gas purification apparatuses 101, 201 may dispense with the diffusion plate 107 and the DPF 108.

An exhaust gas purification apparatus includes an oxidation catalyst provided in an exhaust gas passage through which exhaust gas flows, a SCR catalyst provided downstream of the oxidation catalyst, a urea water passage that is formed through a urea water pipe and provided in the oxidation catalyst and a urea water supply device provided outside the exhaust gas passage for supplying urea water to the urea water passage. The urea water passage is separated from the oxidation catalyst and led downstream of the oxidation catalyst.

## Claims

1. An exhaust gas purification apparatus comprising:
an oxidation catalyst (106) provided in an exhaust gas passage (105) through which exhaust gas flows;
a SCR catalyst (109) provided downstream of the oxidation catalyst;
a urea water passage (112, 212) formed through a urea water pipe (110, 210), wherein the urea water passage is provided in the oxidation catalyst, being separated from the oxidation catalyst and led downstream of the oxidation catalyst; and
a urea water supply device (111) provided outside the exhaust gas passage for supplying urea water to the urea water passage.

2. The exhaust gas purification apparatus according to claim 1, **characterized in that** the urea water passage is extended from outside the oxidation catalyst to the oxidation catalyst in the exhaust gas passage and separated from the exhaust gas.

3. The exhaust gas purification apparatus according to any one of claims 1 and 2, **characterized in that** the exhaust gas purification apparatus further including:
a casing (102) that forms the exhaust gas passage and houses the oxidation catalyst.

4. The exhaust gas purification apparatus according to claim 3, **characterized in that** the urea water passage is passed through the casing upstream of the oxidation catalyst, connected to the urea water supply device and extended downstream of the oxidation catalyst through upstream of the oxidation catalyst.

5. The exhaust gas purification apparatus according to any one of claims 1 through 4, **characterized in that** the exhaust gas purification apparatus further including:
a mixing device (107) provided in the exhaust gas passage between the oxidation catalyst and the SCR catalyst for mixing the exhaust gas with ammonia into which the urea water is hydrolyzed.

6. The exhaust gas purification apparatus according to claim 5, **characterized in that** the mixing device is a disk-shaped plate (107), facing end of the urea water pipe.

7. The exhaust gas purification apparatus according to any one of claims 1 through 6, **characterized in that** the exhaust gas purification apparatus further including:
a heat-absorbing device (210C) provided in the urea water pipe forming the urea water passage for absorbing heat from the exhaust gas.

8. The exhaust gas purification apparatus according to claim 7, **characterized in that** the heat-absorbing device is a fin (210C) provided on outer peripheral surface of the urea water pipe.

9. The exhaust gas purification apparatus according to any one of claims 1 through 8, **characterized in that** the exhaust gas purification apparatus further including:
a DPF (108) provided downstream of the oxidation catalyst for removing particulate matter in the exhaust gas.

10. The exhaust emission purification apparatus according to any one of claims 1 through 9, **characterized in that** the exhaust gas purification apparatus is fixed to an engine assembly (10).
